Europäisches Patentamt

European Patent Office

Office européen des brevets

(11) Veröffentlichungsnummer: **0 678 561 A2**

# (12) EUROPÄISCHE PATENTANMELDUNG

(21) Anmeldenummer: **95105711.6**

(22) Anmeldetag: **15.04.95**

(51) Int. Cl.6: **C09C 1/62**, C09C 3/12, C09D 7/12

(30) Priorität: **22.04.94 DE 4414079**

(43) Veröffentlichungstag der Anmeldung:
**25.10.95 Patentblatt 95/43**

(84) Benannte Vertragsstaaten:
**CH DE FR GB IT LI**

(71) Anmelder: **BASF Aktiengesellschaft
Carl-Bosch-Strasse 38
D-67063 Ludwigshafen (DE)**

(72) Erfinder: **Schmid, Raimund, Dr.
Im Falkenhorst 1
D-67435 Neustadt (DE)**
Erfinder: **Mronga, Norbert, Dr.
Ringstr. 2
D-69221 Dossenheim (DE)**
Erfinder: **Keller, Harald, Dr.
Dammstueckerweg 29
D-67069 Ludwigshafen (DE)**
Erfinder: **Gomez, Juan Antonio Gonzalez, Dr.
Schwalbenweg 37
D-67063 Ludwigshafen (DE)**

(54) **Zweifach gasphasenpassivierte Metallpigmente.**

(57) Passivierte Metallpigmente, erhältlich durch Gasphasenzersetzung von flüchtigen Phosphorverbindungen und von flüchtigen stickstoffhaltigen Siliciumverbindungen mit Wasserdampf und/oder Sauerstoff in Gegenwart der bewegten Pigmentteilchen sowie Herstellung dieser Pigmente und ihre Verwendung zum Einfärben von wasserhaltigen Druckfarben, Tinten und Lacken.

EP 0 678 561 A2

Die vorliegende Erfindung betrifft neue passivierte Metallpigmente, erhältlich durch Gasphasenzersetzung von flüchtigen Phosphorverbindungen und von flüchtigen stickstoffhaltigen Siliciumverbindungen mit Wasserdampf und/oder Sauerstoff in Gegenwart der bewegten Pigmentteilchen.

Außerdem betrifft die Erfindung ein Verfahren zur Herstellung dieser Pigmente sowie ihre Verwendung zum Einfärben von wasserhaltigen Lakken, Druckfarben und Tinten.

Aus Gründen des Umweltschutzes sind in den letzten Jahren verstärkt Lacksysteme mit möglichst geringem Gehalt an Lösungsmitteln entwickelt worden. Der weitgehende Austausch organischer Lösungsmittel gegen Wasser führte zu großen Schwierigkeiten bei der Herstellung von metallpigmenthaltigen Lacken und Druckfarben.

Metallpigmente, wie beispielsweise Aluminiumflakes, reagieren bekanntermaßen exotherm mit Wasser unter Bildung von Aluminiumhydroxid und Freisetzung von Wasserstoff. Die Veränderung der Pigmentoberflächen, im Extremfall die völlige Zerstörung der Pigmente und die reduzierenden Eigenschaften des freigesetzten Wasserstoffs, die zu chemischen Veränderungen, z.B. an im Lack zusätzlich vorhandenen transparenten Buntpigmenten, führen können, beeinträchtigen die optischen Eigenschaften des Lacks (z.B. Glanz, Brillanz, Farbton) stark. Zudem führt die Wasserstoffentwicklung zu einem beträchtlichen Wasserstoffdruck im Innern von Lagerbehältnissen und damit zu einer ernsthaften Gefährdung im Umgang damit.

Andererseits erfreuen sich aber gerade Metallic-Überzüge, die den damit versehenen Gegenständen Glanz und brillantes Aussehen verleihen, in den letzten zwei Jahrzehnten ständig wachsender Beliebtheit.

Es finden sich daher insbesondere in der Patentliteratur schon eine Vielzahl von Vorschlagen zur Lösung des oben geschilderten Problems. Eine kurze Übersicht ist in Farbe + Lack 97, 4/1991, S. 311 - 314 enthalten.

Bei den dort aufgeführten, gängigen Verfahren erfolgt die Stabilisierung der Metallpigmente auf naßchemischem Weg.

Die Passivierung von Metallpigmenten durch Gasphasenbeschichtung (chemical vapor deposition, CVD) wird erstmals in der nicht vorveröffentlichten DE-A-42 36 332 beschrieben. Hier werden durch Hydrolyse insbesondere von Estern von Phosphorsäuren, Phosphor- oder Vanadiumoxyhalogeniden passivierende Einkomponentenbeschichtungen aufgebracht.

Vor allem die über die CVD-Methode erhaltenen Pigmente sind in siedendem Wasser zwar sehr stabil (> 24h), in schwach alkalischen, wäßrigen Systemen, wie sie in aminhaltigen Wasserbasislakken auftreten, zeigen sie wie die dem weiteren Stand der Technik entsprechenden Pigmente jedoch keine ausreichende Stabilität.

Der Erfindung lag daher die Aufgabe zugrunde, passivierte Metallpigmente bereitzustellen, die insbesondere auch in schwach alkalischen, wäßrigen Systemen stabil sind und sich insgesamt durch vorteilhafte Anwendungseigenschaften auszeichnen.

Demgemäß wurden passivierte Metallpigmente gefunden, welche durch Gasphasenzersetzung von flüchtigen Phosphorverbindungen und von flüchtigen stickstoffhaltigen Siliciumverbindungen mit Wasserdampf und/oder Sauerstoff in Gegenwart der bewegten Pigmentteilchen erhältlich sind.

Außerdem wurde ein Verfahren zur Herstellung der passivierten Metallpigmente durch Gasphasenbeschichtung gefunden, welches dadurch gekennzeichnet ist, daß man flüchtige Phosphorverbindungen und flüchtige stickstoffhaltige Siliciumverbindungen gleichzeitig oder in beliebiger Reihenfolge nacheinander mit Wasserdampf und/oder Sauerstoff in Gegenwart der bewegten Pigmentteilchen zersetzt.

Weiterhin wurde die Verwendung der passivierten Metallpigmente zur Einfärbung von wasserhaltigen Lacken, Druckfarben und Tinten gefunden.

Für die erfindungsgemäßen Pigmente kommen als Substrate alle für Metalleffektpigmente bekannten Metalle in Plättchenform in Betracht; z.B. sind neben Kupfer und seinen Legierungen, wie Messing oder Bronzen, sowie Eisen und seinen Legierungen vor allem Aluminium und seine Legierungen geeignet.

Von besonderem Interesse sind Aluminiumplättchen, die in einfacher Weise durch Herausstanzen aus Aluminiumfolie oder nach üblichen Verdüsungs- oder Mahltechniken erhalten werden. Es können handelsübliche Produkte verwendet werden, wobei die Metalloberfläche weitgehend frei von Fetten oder anderen Belegmitteln sein sollte.

Weiterhin sind als Substrate bereits metalloxidbeschichtete Metallpigmente, insbesondere solche auf der Basis von Aluminium, geeignet. Bevorzugt sind hierbei über die CVD-Methode mit Titandioxid und vor allem mit Eisenoxid belegte Aluminiumflakes (US-A-5 026 429 bzw. EP-A-33 457), da die Passivierung direkt anschließend an die erste Beschichtung in demselben Reaktor vorgenommen werden kann.

Ebenso geeignet sind auch mit Zirkonoxid, Siliciumoxid oder Aluminiumoxid beschichtete Aluminiumflakes, die nach naßchemischen Beschichtungsverfahren (US-A-5 261 955 bzw. US-A-2 885 366) oder wie in der älteren deutschen Patentanmeldung P 44 05 492.0 beschrieben hergestellt werden können.

Dort werden im wesentlichen aus Silicium- und/oder Aluminiumoxid bzw. -oxidhydrat bestehende Schichten durch saure oder bevorzugt basische Hydrolyse organischer Silicium- und/oder Aluminiumverbindungen, bei denen die organischen Reste über Sauerstoffatome an die Metalle gebunden sind (also z.B. Acetylacetonate oder Alkoholate, insbesondere $C_1$-$C_4$-Alkanolate), in Gegenwart eines organischen Lösungsmittels, in dem die Metallverbindungen löslich sind und das mit Wasser mischbar ist (also z.B. Alkohole, Ketone, Ether, Carbonsäureamide), hergestellt. Bei einer besonders bevorzugten Ausführungsform dieses Verfahrens werden Tetraethoxysilan und/oder Aluminiumtriisopropanolat in Gegenwart von Isopropanol und einer wäßrigen Ammoniaklösung als Katalysator (und selbstverständlich der Substratteilchen) hydrolysiert, wobei schrittweise auf Rückflußtemperatur erhitzt wird.

Selbstverständlich können die Substratteilchen auch mit Mischungen der genannten Oxide belegt sein.

Die Größe der Substratteilchen ist an sich nicht kritisch und kann auf den jeweiligen Anwendungszweck abgestimmt werden. In der Regel haben die plättchenförmigen Teilchen Durchmesser von ungefähr 1 bis 200 $\mu$m, vorzugsweise etwa 5 bis 100 $\mu$m, und eine spezifische Oberfläche (BET) von üblicherweise 0,5 bis 15 $m^2/g$, bevorzugt 1 bis 7 $m^2/g$.

Die erfindungsgemäßen Metallpigmente weisen eine Passivierung durch Zweikomponenten-Beschichtung auf, die vorteilhaft nach dem erfindungsgemäßen Verfahren durch Gasphasenzersetzung flüchtiger Phosphorverbindungen und flüchtiger stickstoffhaltiger Siliciumverbindungen zu erhalten ist.

Die passivierenden Komponenten können gleichzeitig oder nacheinander aufgebracht werden. Die Reihenfolge ist dabei beliebig, d.h. es kann sowohl zunächst die phosphorhaltige und dann die siliciumhaltige Komponente als auch zuerst die siliciumhaltige und dann die phosphorhaltige Komponente aufgebracht werden.

Die erstgenannte Variante bietet jedoch die Möglichkeit, durch Verwendung von funktionalisierten Silanen die Pigmentoberfläche gezielt auf die Anforderungen der verschiedenen Lacksysteme einzustellen, und ist daher bevorzugt.

Die erfindungsgemäßen Metallpigmente enthalten in der Regel 0,01 bis 10, bevorzugt 0,1 bis 5 Gew.-% Phosphor und im allgemeinen 0,01 bis 10, vorzugsweise 0,1 bis 5 Gew.-% Silicium, jeweils bezogen auf die vollständig, also zweifach, passivierten Pigmente.

Als flüchtige stickstoffhaltige Siliciumverbindungen sind für die Beschichtung insbesondere Silane der allgemeinen Formel I

$R_a SiX_b$    I

geeignet, wobei die Variablen folgende Bedeutung haben:

R    $C_1$-$C_{10}$-Alkylreste, die durch eine endständige Amino-, Mono($C_1$-$C_{10}$-alkyl)amino- oder Di($C_1$-$C_{10}$-alkyl)aminogruppe sowie gegebenenfalls weitere Aminogruppen substituiert sind, deren Kohlenstoffketten durch eine oder mehrere Iminogruppen unterbrochen sein können und die ein- oder mehrfach ungesättigt sein können, wobei die Reste R für a>1 gleich oder verschieden sein können;

X    $C_1$-$C_4$-Alkoxy, $C_1$-$C_4$-Alkyl, $C_2$-$C_4$-Alkenyl oder Halogen;

a    1 bis 3;

b    1 bis 3, wobei die Summe a + b = 4 ist.

Besonders geeignet sind dabei Silane der Formel I, die bei Temperaturen unterhalb von 500°C einen ausreichend hohen Dampfdruck aufweisen, um eine einfache Verdampfung zu gewährleisten.

Bevorzugte Silane I enthalten mindestens einen durch eine Aminofunktion substituierten Rest R sowie mindestens einen Alkoxyrest X.

Besonders bevorzugt sind Silane der Formel Ia

$R'SiX'_3$    Ia

in der R' $\omega$-Amino-$C_1$-$C_4$-alkyl und X' Methoxy oder Ethoxy bedeutet.

Beispiele für ganz besonders bevorzugte Silane sind $H_2N$-$(CH_2)_3$-$Si(OC_2H_5)_3$ und $H_2N$-$(CH_2)_3$-$Si(OCH_3)_3$.

Als Beispiele für weitere besonders geeignete Silane I sind zu nennen:
$H_2N$-$(CH_2)_2$-$Si(OC_2H_5)_3$,    $H_2N$-$(CH_2)_4$-$Si(OC_2H_5)_3$, $[H_2N$-$(CH_2)_3]_2Si(OC_2H_5)_2$,    $H_2N(CH_2)_3$-$Si(OC_2H_5)_2$- $(CH_3), H_2N$-$(CH_2)_3$-$Si(OC_2H_5)_2(CH=CH_2)$,    $H_2N$- $CH_2$-$NH$-$CH_2$-$Si(OC_2H_5)_3$ und $H_2N$-$CH_2$-$CH=CH$- $Si(OC_2H_5)_3$.

Als flüchtige Phosphorverbindungen sind, wie in der nicht vorveröffentlichten DE-A-42 36 332 beschrieben, insbesondere solche Verbindungen geeignet, die sich formal von den Sauerstoffsäuren des Phosphors ableiten.

Auch hier sind solche Verbindungen besonders geeignet, die unterhalb von 500°C bereits einen merklichen Dampfdruck aufweisen.

Beispiele für bevorzugte Phosphorverbindungen sind die Tri- und Dialkyl-(insbesondere-$C_1$-$C_4$- alkyl)-ester der Phosphorsäure der Formeln (RO)- $_3PO$ (R = Methyl, Ethyl, Propyl, Isopropyl, Butyl oder Isobutyl) und $(RO)_2(HO)PO$ (R = Methyl oder Ethyl).

Besonders bevorzugt sind die Tri- und Dialkyl- (insbesondere -$C_1$-$C_2$-alkyl)ester der phosphorigen Säure der Formeln $(RO)_3P$ und $(RO)_2POH$ (R = Methyl oder Ethyl).

Von besonderem Interesse sind auch Phosphoroxyhalogenide des Typs POX$_3$, wobei X gleiche oder verschiedene Halogenatome, insbesondere Chlor- und/oder Bromatome bedeutet. Als Beispiele seien POBr$_3$, POBrCl$_2$, POBr$_2$Cl und vor allem POCl$_3$ genannt.

Die passivierenden Phosphor- und Siliciumverbindungen reagieren in gasförmigem Zustand vermutlich zunächst mit dem bei der Beschichtung anwesenden Wasserdampf bzw. Sauerstoff zu reaktiven Spezies, die anschließend mit aktiven Stellen der zu schützenden Oberfläche der Pigmentteilchen reagieren.

Das erfindungsgemäße Passivierungsverfahren kann vorteilhaft in einem Wirbelschichtreaktor, wie er beispielsweise in der EP-A-45 581 beschrieben ist, vorgenommen werden. Die Pigmentteilchen werden dabei zunächst mit einem inerten Wirbelgas, bevorzugt Stickstoff, fluidisiert und auf die Reaktionstemperatur von in der Regel 100 bis 350°C (z.B. für Phosphoroxychlorid bevorzugt 130 bis 220°C und für 3-Aminopropyltriethoxysilan bevorzugt 190 bis 250°C) erhitzt. Die verdampften Phosphor- bzw. Siliciumverbindungen sowie der Wasserdampf und/oder der Sauerstoff (bzw. Luft oder andere Sauerstoff-Inertgas-Gemische) werden dann mit Hilfe eines inerten Trägergasstromes (verschiedenen Teilströmen des Wirbelgases) aus vorgeschalteten Verdampfergefäßen über getrennte Düsen eingetragen.

Die Konzentration der verdampften passivierenden Spezies beträgt, bezogen auf die Gesamtgasmenge im Reaktor, zweckmäßigerweise ≤ 3 Vol.-%, vorzugsweise 0,001 bis 0,5 Vol.-%.

Die erforderliche Menge Wasserdampf hängt von der Konzentration der passivierenden Verbindung ab und sollte mindestens der stöchiometrisch zur Hydrolyse erforderlichen Menge entsprechen, bevorzugt ist jedoch ein 10 bis 100facher Überschuß.

Zur vollständigen Zersetzung der Ester der Phosphorsäure und der phosphorigen Säure ist Sauerstoff (bzw. Luft) erforderlich, Wasserdampf kann sowohl anwesend als auch abwesend sein. Bezogen auf die Gesamtgasmenge im Reaktor, beträgt die Sauerstoffmenge vorteilhaft 0,1 bis 5 Vol.-%.

Die erforderliche Menge Sauerstoff sollte ebenfalls mindestens der stöchiometrisch zur Oxidation von Kohlenstoff erforderlichen Menge entsprechen, bevorzugt ist auch hier ein 10 bis 100facher Überschuß.

Die beiden Beschichtungskomponenten können vorteilhaft direkt, ohne Zwischenisolierung des einfach beschichteten Substrats, gleichzeitig oder vorzugsweise nacheinander im Wirbelschichtreaktor vorgenommen werden. Für die letzte Variante ist nur die Verdampfervorlage auszutauschen und gegebenenfalls die Reaktionstemperatur zu regulieren.

Übliche Reaktionszeiten betragen für beide Beschichtungsvorgänge 1 bis 10 h. Anschließend wird das Produkt, vorzugsweise unter weiterer Fluidisierung mit dem Wirbelgas, auf Raumtemperatur abgekühlt und kann dann dem Reaktor entnommen werden.

Die passivierten Metallpigmente können zur Verbesserung des Glanzes noch einem anschließenden Polierschritt unterworfen werden. Hierbei kann man z.B. so vorgehen, daß man die Pigmente mit ungefähr 40 bis 60 Gew.-% (bezogen auf die Pigmentmenge) Schwerbenzin in eine mit Edelstahlkugeln beschickte Kugelmühle einbringt und diese 1 bis 10 h auf einem Rollbrett bewegt.

Eine schnelle Überprüfung der Wirksamkeit der Passivierung, d.h. hier der Stabilität der erfindungsgemäßen Pigmente in schwach alkalischen, wäßrigen Systemen, kann mit Hilfe des folgenden Kochtests erfolgen: Eine Suspension von 1,5 g des zu testenden Pigments in einer Lösung aus 75 ml Butylglykol und 75 ml einer 10 gew.-%igen wäßrigen Lösung von Dimethylethanolamin wird unter Rückfluß in einer gasdicht verschlossenen Apparatur erhitzt. Der sich dabei bildende Wasserstoff wird aufgefangen. Gemessen wird die Zeit, die zur Freisetzung von 400 ml Wasserstoff erforderlich ist.

Die erfindungsgemäß passivierten Metallpigmente zeichnen sich durch hohe Stabilitäten in wäßrigen Systemen, vor allem auch schwach alkalischen, wäßrigen Systemen aus. Bei dem oben beschriebenen Test ergeben sich Kochzeiten von mehr als 20 h, meist mehr als 25 h, während lediglich phosphatierte oder silanisierte Pigmente nur etwa 1 bis 8 h unter den genannten Bedingungen stabil sind.

Die erfindungsgemäßen Pigmenten eignen sich vorteilhaft für eine Vielzahl von Anwendungen, wobei insbesondere die Verwendung in wäßrigen, vor allem auch aminhaltigen, Lacken, Druckfarben und Tinten genannt sein soll.

Beispiele

Herstellung von erfindungsgemäßen passivierten Aluminiumpigmenten

Beispiel 1

a) Eine Mischung aus 250 g feinerem Aluminiumpulver (mittlerer Teilchendurchmesser 20 $\mu$m, BET-Oberfläche 4,5 m$^2$/g) und 250 g gröberem Aluminiumpulver (mittlerer Teilchendurchmesser 60 $\mu$m, BET-Oberfläche 1,5 m$^2$/g) wurde im Wirbelschichtreaktor durch Einleiten von insgesamt 1600 l/h Stickstoff fluidisiert und auf 190°C aufgeheizt. Dabei wurde ein Viertel der Wirbelgase (400 l/h) durch eine auf 40°C temperierte Vorlage mit Phosphoroxychlorid und ein weiteres Viertel der Wirbelgase über eine auf 50°C temperierte Wasservorlage geleitet. In 8 h wurden so 130 ml $POCl_3$ zugeführt.

b) Analog zu Schritt a) wurden anschließend 85 ml 3-Aminopropyltriethoxysilan aus einer auf 110°C erhitzten Verdampfervorlage in 8 h in den jetzt auf 220°C aufgeheizten Reaktor überführt.

Das erhaltene passivierte Aluminiumpigment hatte einen Phosphorgehalt von 1,7 Gew.-% und einen Siliciumgehalt von 1,4 Gew.-%.

Beim oben beschriebenen Kochtest dauerte es 25,5 h, bis 400 ml Wasserstoff freigesetzt waren.

Zum Vergleich wurde eine nur analog Schritt a) phosphatierte Probe dem Kochtest unterworfen. Das Pigment zersetzte sich in 1,5 h.

Für einen weiteren Vergleich wurde die gleiche Aluminiummischung nur analog Schritt b) silanisiert. Das erhaltene Pigment hatte einen Siliciumgehalt von 0,4 Gew.-% und zersetzte sich beim Kochtest in 8 min.

In einem zusätzlichen Vergleichsversuch wurde die gleiche Aluminiummischung analog Schritt a) phosphatiert und analog Schritt b), aber unter Verwendung von 90 ml n-Propyltriethoxysilan silanisiert. Das hierbei erhaltene Pigment zersetzte sich im Kochtest in 10 min.

Beispiel 2

Analog Beispiel 1 wurde die gleiche Aluminiummischung passiviert, jedoch wurde die Reihenfolge der Schritte a) und b) vertauscht, es wurde also zuerst silanisiert und anschließend phosphatiert.

Das erhaltene passivierte Aluminiumpigment hatte einen P-Gehalt von 1,5 Gew.-% und einen Si-Gehalt von 1,4 Gew.-% und wurde zusätzlich einem Polierschritt unterworfen. Dazu wurde das Pigment mit 50 Gew.-% Schwerbenzin in einer mit Edelstahlkugeln (Durchmesser etwa 8 bis 10 mm) beschickten Kugelmühle 8 h auf einem Rollbrett bewegt. Anschließend wurde durch Sieben in Testbenzin die Nutzfraktion von < 32 $\mu$m abgetrennt.

Beim Kochtest wurden 400 ml Wasserstoff erst nach 30 h entwickelt.

Beispiel 3

500 g der Aluminiummischung aus Beispiel 1 wurden im Wirbelschichtreaktor zunächst bis zu einem goldenen Farbton mit Eisenoxid beschichtet.

Dazu wurde die Aluminiummischung mit insgesamt 1900 l/h Stickstoff fluidisiert und auf 200°C aufgeheizt. Dabei wurden 400 l/h des Wirbelgases durch eine auf Raumtemperatur gehaltene Vorlage mit Eisenpentacarbonyl geleitet. Gleichzeitig wurden über eine weitere Reaktoröffnung 200 l/h Luft eingeblasen. In 10 h wurden so 150 ml $Fe(CO)_5$ zu Eisenoxid zersetzt.

a) Für die anschließende Phosphatierung wurde die eisenoxidbeschichtete Aluminiummischung mit insgesamt 2000 l/h Stickstoff unter Beibehaltung der Reaktortemperatur von 200°C fluidisiert. 400 l/h der Wirbelgase wurden durch eine auf Raumtemperatur gehaltene Vorlage mit Trimethylphosphit geleitet. Dem restlichen Wirbelgas wurden 100 l/h Luft zugemischt. In 5 h wurden so 50 ml $(CH_3O)_3P$ zugeführt.

b) Die Silanisierung mit 85 ml 3-Aminopropyltriethoxysilan erfolgte analog Beispiel 1.

Das erhaltene passivierte Aluminiumpigment hatte einen Fe-Gehalt von 7,1 Gew.-%, einen P-Gehalt von 1,9 Gew.-% und einen Si-Gehalt von 0,3 Gew.-%.

Im Kochtest wurden 400 ml Wasserstoff erst nach 30 h entwickelt.

Zum Vergleich wurde eine nur analog Schritt a) phosphatierte Probe dem Kochtest unterworfen. Das Pigment setzte in 10,5 h 400 ml Wasserstoff frei.

Für einen weiteren Vergleich wurde die gleiche eisenoxidbeschichtete Aluminiummischung nur analog Schritt b), allerdings unter Verwendung von 150 ml 3-Aminopropyltriethoxysilan silanisiert. Das erhaltene Pigment hatte einen Si-Gehalt von 1,3 Gew.-% und zersetzte sich beim Kochtest in 12 min.

**Patentansprüche**

1. Passivierte Metallpigmente, erhältlich durch Gasphasenzersetzung von flüchtigen Phosphorverbindungen und von flüchtigen stickstoffhaltigen Siliciumverbindungen mit Wasserdampf und/oder Sauerstoff in Gegenwart der bewegten Pigmentteilchen.

2. Passivierte Metallpigmente nach Anspruch 1, bei denen als Siliciumverbindungen Silane der allgemeinen Formel I

$R_aSiX_b$     I

in der die Variablen folgende Bedeutung haben:

R     $C_1$-$C_{10}$-Alkylreste, die durch eine endständige Amino-, Mono($C_1$-$C_{10}$-alkyl)-amino- oder Di($C_1$-$C_{10}$-alkyl)-aminogruppe sowie gegebenenfalls weitere Aminogruppen substituiert sind, deren Kohlenstoffketten durch eine oder mehrere Iminogruppen unterbrochen sein können und die ein- oder mehrfach ungesättigt sein können, wobei die Reste R für a>1 gleich oder verschieden sein können;

X    C$_1$-C$_4$-Alkoxy, C$_1$-C$_4$-Alkyl, C$_2$-C$_4$-Alkenyl oder Halogen;

a    1 bis 3;

b    1 bis 3, wobei die Summe a+b=4 ist,

verwendet worden sind.

3. Passivierte Metallpigmente nach Anspruch 1 oder 2, bei denen als Siliciumverbindungen Silane der allgemeinen Formel Ia

R'SiX'$_3$    Ia

in der R' ω-Amino-C$_1$-C$_4$-alkyl und X' Methoxy oder Ethoxy bedeutet, verwendet worden sind.

4. Passivierte Metallpigmente nach den Ansprüchen 1 bis 3, bei denen als Phosphorverbindungen Tri- oder Di-C$_1$-C$_4$-alkylester der Phosphorsäure, Tri- oder Di-C$_1$-C$_4$-alkylester der phosphorigen Säure oder Phosphoroxyhalogenide verwendet worden sind.

5. Passivierte Metallpigmente nach den Ansprüchen 1 bis 4, erhältlich durch aufeinanderfolgende Zersetzung zunächst der Phosphorverbindungen und anschließend der Siliciumverbindungen.

6. Passivierte Metallpigmente nach den Ansprüchen 1 bis 5, bei denen die Pigmentteilchen im wesentlichen aus Aluminium, Aluminiumlegierungen, Kupfer, Kupferlegierungen, Eisen oder Eisenlegierungen bestehen.

7. Passivierte Metallpigmente nach den Ansprüchen 1 bis 5, bei denen die Pigmentteilchen bereits mit einer ersten Metalloxidschicht belegt sind.

8. Passivierte Metallpigmente nach Anspruch 7, bei denen die Metalloxidschicht im wesentlichen aus Titanoxid, Eisenoxid, Zirkonoxid, Siliciumoxid und/oder Aluminiumoxid besteht.

9. Verfahren zur Herstellung von passivierten Metallpigmenten gemäß den Ansprüchen 1 bis 8 durch Gasphasenpassivierung, dadurch gekennzeichnet, daß man flüchtige Phosphorverbindungen und flüchtige stickstoffhaltige Siliciumverbindungen gleichzeitig oder in beliebiger Reihenfolge nacheinander mit Wasserdampf und/oder Sauerstoff in Gegenwart der bewegten Pigmentteilchen zersetzt.

10. Verwendung von passivierten Metallpigmenten gemäß den Ansprüchen 1 bis 8 zur Einfärbung von wasserhaltigen Lacken, Druckfarben und Tinten.